# EUROPEAN PATENT SPECIFICATION

(11) **EP 2 239 668 B1**
(45) Date of publication and mention of the grant of the patent: **09.09.2015**
(21) Application number: 10163487.1
(22) Date of filing: 23.09.2004
(51) Int. Cl.: G06F 17/30

(54) **Web browser graphical user interface and method for implementing same**
Graphische Benutzerschnittstelle für ein Web-Browser und Verfahren zur Implementierung derselben
Interface graphique d'utilisateur pour navigateur web et Méthode de mise en oeuvre

(43) Date of publication of application: 13.10.2010
(62) Divisional of application: 04104637.6
(73) Proprietor: BlackBerry Limited, Waterloo, ON N2K 0A7 (CA)
(72) Inventor: Tapuska, David, Francis, Waterloo Ontario N2T 2T7 (CA); Knowles, Michael, Waterloo Ontario N2T 2X5 (CA); Lazaridis, Mihal, Waterloo Ontario N2T 2K1 (CA); Yach, David, P., Waterloo Ontario N2K 2N1 (CA)
(74) Representative: MERH-IP Matias Erny Reichl Hoffmann

(56) References cited:
- EP-A2- 1 202 188
- GB-A- 2 137 788
- GOOSE S ET AL: "Attenuator: Towards preserving the original appearance of large documents when rendered on small screen mobile devices" PROCEEDINGS OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 3, 6 July 2003 (2003-07-06), pages 505-508, XP010651132 ISBN: 978-0-7803-7965-7
- WATTERS C ET AL: "Transformation volatility and the gateway model for web page migration to small screen devices" SYSTEM SCIENCES, 2004. PROCEEDINGS OF THE 37TH ANNUAL HAWAII INTERNATIONAL CONFERENCE ON 5-8 JAN. 2004, PISCATAWAY, NJ, USA,IEEE, 5 January 2004 (2004-01-05), pages 97-107, XP010683397 ISBN: 0-7695-2056-1
- FOX A ET AL: "Experience with Top Gun Wingman: a proxy-based graphical Web browser for the 3Com PalmPilot" MIDDLEWARE. IFIP INTERNATIONAL CONFERENCE ON DISTRIBUTED SYSTEMS PLATFORMS AND OPEN DISTRIBUTED PROCESSING, XX, XX, September 1998 (1998-09), pages 407-424, XP002166473

## Description

This application relates to the field of computer user interfaces, and in particular to graphical user interfaces used to browse documents, and methods for implementing such interfaces.

### BACKGROUND

Graphical user interfaces used to browse documents such as web pages are well known. In typical document browser interfaces, a portion of the document is displayed on a screen, and other portions of the document are viewed by scrolling the document up and down across the screen using keystrokes, mouse inputs, or other user inputs.

This method of browsing a document works well for most applications. However, inadequacies become apparent when the document is particularly long. In such cases, it may be necessary to scroll through the document for a considerable period of time before the portion of interest can be viewed. One effort to solve this problem is the use of a "page up" and "page down" feature to allow the user to scroll quickly. Another is the use of a vertical scroll bar allowing the user to select a relative location of the document to be viewed on the screen. However, such solutions do not allow the user to easily identify within the document, the portion of interest to jump to.

A further effort to solve this problem is the display of selectable thumbnail images of pages of the document on a side panel, or to allow the user to jump to a particular page number. These methods can be effective but can only be implemented when the document is conveniently split up into pages. Of course many documents such as web pages are continuous, are not split up into such pages, and as such cannot be displayed and navigated using such methods.

The inadequacies identified above are particularly acute when the screen is small, as is the case when the document is being viewed on, for example, a personal digital assistant (PDA), a wireless handheld device, or a web-enabled cell phone.

Many documents, and most web pages in particular, are designed for, and are best viewed on a wide screen, typically one having a horizontal resolution of 800 or 1024 pixels. In many cases, web page authors take advantage of these large screen sizes by giving web pages a two-dimensional structure. This two-dimensional structure lays out the web page as a collection of adjacent areas (often rectangular areas, but not necessarily so). These areas contain different types of semantic information, such as a set of links to other areas of the website, a story, an image, advertisements, etc. Very often, these different areas have distinct visual features that allow a user to quickly identify an area of interest with a simple glance at the page. Users often use those distinct, large-scale visual features to quickly identify the specific area of the page they are interested in. This, in turn, allows them to quickly focus their attention on that area and read the text, view the image, click a desired link, or otherwise interact with the desired area of the page.

The screens on handheld devices are typically much smaller than the screen resolution for which many documents, and especially web pages are authored. Because of this restriction, in order to display the content of web pages, browsers on handheld devices often break apart such web pages and re-render them as a much narrower "ribbon" of content that the user can scroll through vertically to view the entire page. While this "verticalized" re-rendering of the web page retains all of the content of the original web page, much of the two-dimensional structure of the original page is lost.

This verticalization process has several effects. First, the absence of large-scale, two-dimensional landmarks in the verticalized re-renderings makes it much harder for the user to identify the various different semantically distinct areas of content on the verticalized page. Second, the height of the web page in the verticalized re-rendering is many times greater than the original height. The user of the handheld device must perform many more scroll-down operations (e.g., using a trackwheel or some other key or input mechanism to scroll one line or one screenful at a time) in order to navigate through the entire page. Not only is this process tedious, but the very act of having to scroll many times distracts the user as he focuses on the content as it scrolls by, making it even harder for the user to find the desired area of interest. Third, in many pages, the highest value content (e.g., the text of the main story in a news page) ends up being rendered many screenfuls down the verticalized page, forcing the user to perform a large number of scroll operations before the portion of interest can be viewed.

A further problem with the typical method of browsing documents arises where the document needs to be downloaded for viewing, and the document is particularly long or the downloading bandwidth is limited. Because typical document browsing methods require the entire document to be downloaded before the document can be browsed, it may take some time after the document is requested before it can be viewed and browsed dy the user.

Non-patent literature Goose, S. et al., "Attenuator: Towards preserving the original appearance of large documents when rendered on small screen mobile device", 6-9 July 2003, Baltimore, Maryland, USA, IEEE Operations Center, US, vol 3, 6 July 2003, pages 505-508 discloses a proxy-based framework that preserves a view of a web page as it was originally intended for a desktop in a form renderable on a small screen device, and a scheme for region-based interactivity in the web page.

Non-patent literature Watters, C. et al., "Transformation volatility and the gateway model for web page migration to small screen devices", Piscataway, NJ, USA, IEEE, 5 January 2004, pages 97-107 discloses a method for automatic transformation of web pages by which reduced replica of a source page are created for display on a small screen device and which superimposes a zooming capacity over the replica.

GB 2 137 788 A discloses a display system and method for displaying information which is applicable to a small screen device. A document is displayed as a set of non-readable horizontal lines and a portion of the document can be selected for normal-size (readable) display.

EP 1 202 188 A2 discloses a server for displaying web pages on a terminal device regardless of the kind of language used for description on the web pages. The server comprises means for receiving a web page display request from the terminal device, means for receiving web page data demanded by the received web page display request, data conversion means for converting the web page data to data in conformity with the type of the terminal device, and means for transmitting the converted data to the terminal device.

Non-patent literature Fox, A, et al., "Experience with Top Gun Wingmam: a proxy-based graphical Web browser for the 3Com PalmPilot", September 1998, page 407-424 discloses a graphical, proxy-based Web browser for a PDA, which allows to zoom in on scaled down figures In a web page displayed on the PDA.

### SUMMARY

in order to address, the above problems, it is proposed to provide a method, a computer readable medium and a computer system respectively according to the independent claims. Preferred are in the dependent claims.

In a broad aspect, the application provides a method for a web browser to interact with a user, the method comprising: (a) displaying a first representation of a web page in a reduced size; (b) receiving a first input from the user to zoom into a portion of interest within the web page, the portion of interest being selected by the user in the first representation; and (c) displaying a second representation of the selected portion of the web page in a larger size.

The first and second representations may be displayed alternately or simultaneously. In the case where the first and second representations are displayed alternately, the method further contemplates receiving a second input from the user to zoom out, and in response to receiving the second input, replacing the second representation with the first representation. In the case where the first and second representations are displayed simultaneonsly, the method further contemplates displaying in the first representation, indicia identifying the portion of the web page to be displayed in the second representation, and the portion of interest within the web page is selected by the user moving the said indicia within the first representation, and optionally selecting this portion.

Prior to displaying the first representation, the method also contemplates downloading the web page, and rendering the first representation of the web page in a reduced size. Alternately, a rendering of the first representation of the web page in a reduced size may be downloaded prior to displaying the first representation, and a rendering of the second representation of the selected portion of the web page in a larger size may be downloaded between steps (b) and (c).

The method is practised on a bandheld device and the second representation may be a verticalized representation.

In another aspect, the application provides a computer system for displaying a web page, the computer system comprising: a processor; an input device connected to the processor for communicating user inputs to the processor; a screen connected to the processor for displaying the web page; and web page display means associated with the processor operable to cause said processor to: (a) display on the screen, a first representation of the web page in a reduced size; (b) receive from the input device, a first input to zoom into a portion of interest within the web page, the portion of interest being selected in the first representation; and (c) display on the screen, a second representation of the selected portion of the web page in a larger size.

As with the method described above, the web page display means may be operable to cause the processor to display the first and second representations on the screen alternately, or simultaneously. Where the first and second representations are displayed alternately, the display means may also cause the processor to receive a second input from the input device to zoom out, and in response to receiving said second input, to replace the second representation on the screen with the first representation.

The computer system may also comprise a communication device connected to the processor to allow the processor to communicate with another computer. In such a case, the display means may cause the processor to download the web page from said another computer through said communication device, and render the first representation of the web page in a reduced size, both prior to step (a). Alternatively, the display means may cause the processor to download from the other computer through the communication device, a rendering of the first representation of the web page in a reduced size before step (a), and download from the other computer through the communication device a rendering of the second representation of the selected portion of the web page in a larger size between steps (b) and (c).

The computer system is a handheld device.

In a still further aspect, the application provides a method for a server to communicate a web page to a client, the method comprising: rendering a first representation of the web page in a reduced size; transmitting the rendering of the first representation to the client; receiving a request from the client for a rendering of a second representation of a selected portion of the web page in a larger size; and in response to receiving the request, rendering the second representation of the selected portion of the web page in the larger size and transmitting the rendering of said second representation to the client. This method may be practised on a wireless telecommunications server where the client is a wireless handheld device.

The application also contemplates computer-readable media containing instructions for a computer to implement any of the above methods.

Other aspects and features will become apparent, to those ordinarily skilled in the art, upon review of the following description of the specific embodiments.

### BRIEF DESCRIPTION OF THE DRAWINGS

Preferred embodiments will now be described with reference to the attached drawings in which:
Figure 1 is a screen shot of a prior art web browser displaying a web page on a desktop screen;
Figure 2 is a screen shot of a prior art web browser displaying the same web page on a screen of a handheld device;
Figure 3 is a sample screen shot of a web browser in accordance with one embodiment of the user interface of this application, displaying a reduced representation of the web page;
Figure 4 is a sample screen shot of the web browser of Figure 3 displaying a verticalized representation of the web page;
Figure 5 is a sample screen shot of a web browser in accordance with another embodiment of the user interface of this application, displaying the web page;
Figure 6 is a block diagram of an exemplary network used to implement the user interface of Figures 3 through 5;
Figure 7 is a flow chart illustrating two methods of implementing the user interface embodiment of Figures 3 and 4; and
Figure 8 is a flow chart illustrating two methods of implementing the user interface embodiment of Figure 5.

### DETAILED DESCRIPTION OF THE PREFERRED EMBODIMENTS

The preferred embodiments are described and illustrated in the context of the display and browsing of a web page on a wireless handheld device. As will be understood by persons skilled in the art, the preferred embodiments and the subject of this application can be practiced in other contexts without necessarily departing from the scope of this application.

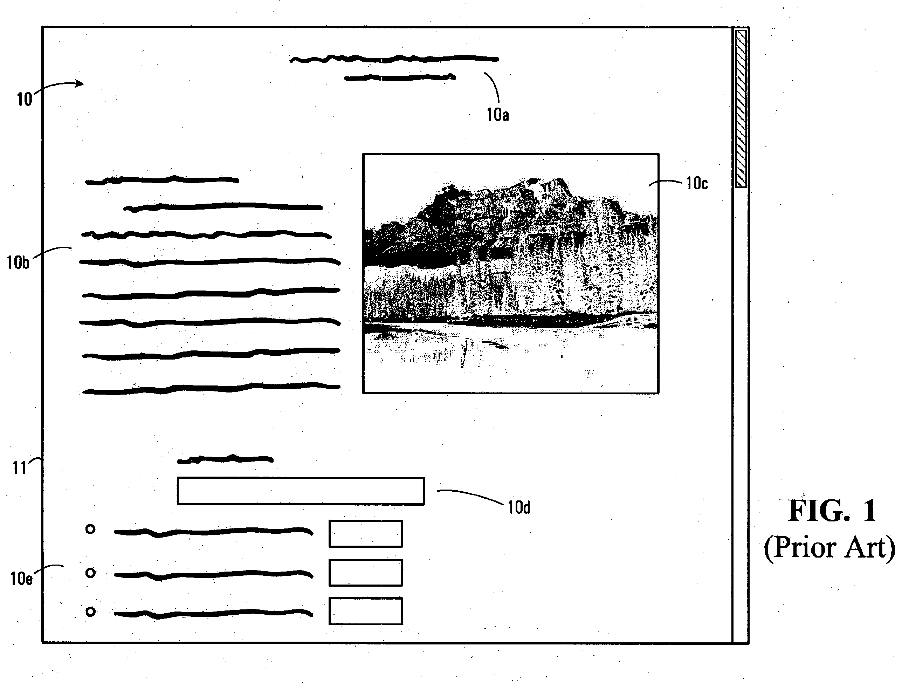

Figure 1 illustrates a typical web browser, for browsing a web page 10 on a desktop screen 11. The web page 10 is displayed in its full intended width on the screen 11, and contains a number of visually distinct features such as a title 10a, a caption 10b, a picture 10c, a search box 10d and a bulleted list 10e. As shown in Figure 1, upon opening the web page 10 using the browser, a first portion of the web page is displayed on the screen 12. In response to user scrolling inputs, the user interface displays other portions of the web page 10, thereby allowing the user to scroll the web page up and down across the screen 12.

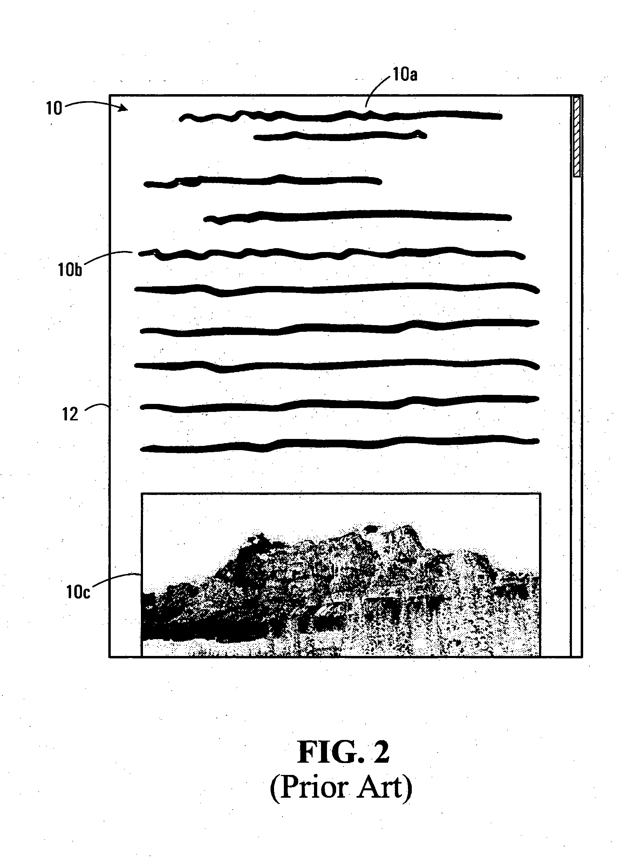

Figure 2 illustrates a typical user interface or browser for browsing a web page 10 on the screen 12 of a handheld device (not shown). Because the horizontal resolution of a handheld device screen 12 is typically much smaller than the horizontal resolution for which most web pages have been created, the web page 10 is rendered, for example by a wireless server or the handheld device itself, such that the web page 10 may be displayed in a narrower or "verticalized" representation. Thus, while the visually distinct features of the web page 10 were originally formatted in two dimensions so as to take advantage of the full width of a desktop screen, the web page has now been rendered to display each feature on a narrower screen in a substantially linear rendering. The caption 10b thus appears in Figure 2 directly below the title 10a, and the picture 10c appears directly below the caption 10b.

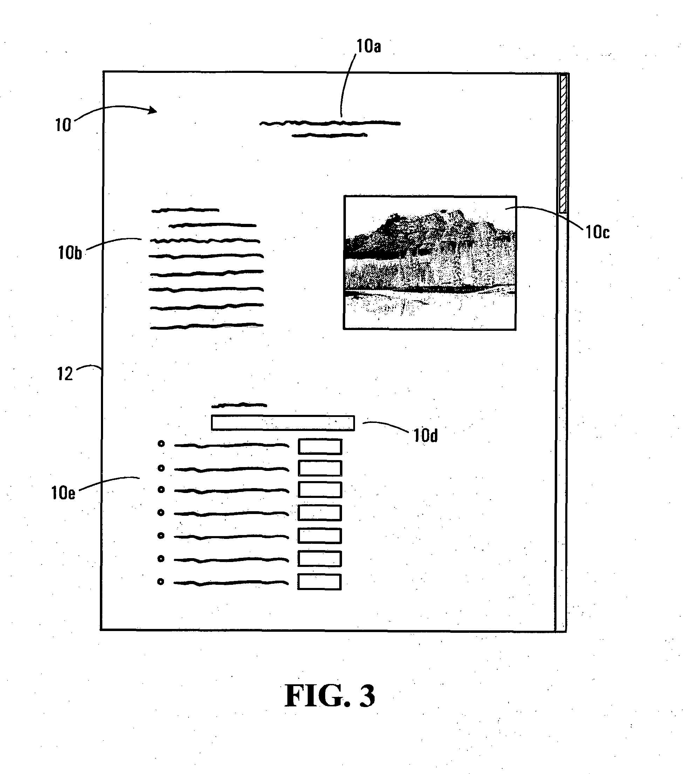

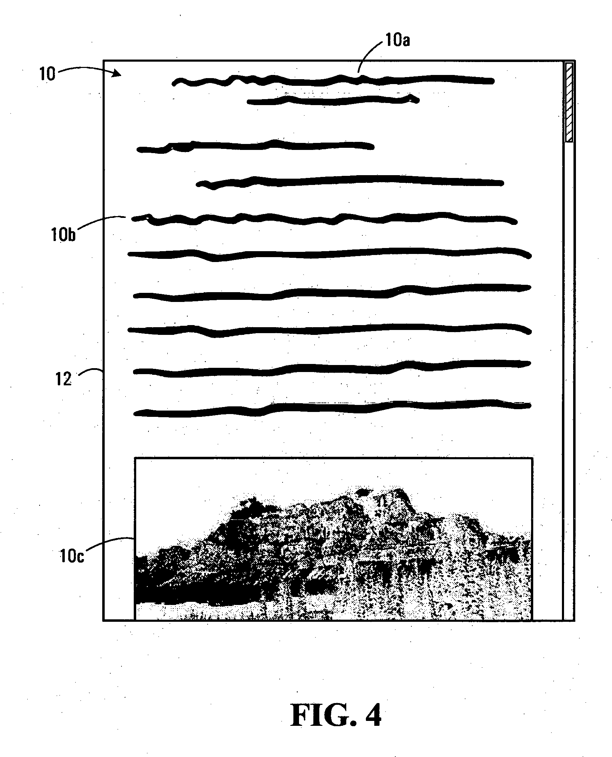

An improved user interface for browsing a web page on a handheld device is illustrated in Figures 3 and 4. In Figure 3, upon the user selecting a web page to download, the screen 12 of the handheld device first displays the web page in its original intended appearance (with the visually distinct features placed in their original two-dimensional orientations), but reduced to a smaller size to fit the width of the screen 12 of the handheld device. Due to its reduced size, this representation lacks details of the original web page 10, but does show the large-scale, two-dimensional features of the different areas of the page, allowing the user to readily identify the portion of interest within the web page 10. The web page 10 can be scrolled on the screen 12 using known means.

Once the user has identified the portion of interest within the web page 10, he selects that portion and selects to zoom into that area. The user can select the portion of interest by using any of a number of known means, for example manipulation in horizontal and/or vertical directions of an outline box superimposed on the reduced representation. Upon selection, a different representation of the web page 10 is displayed on the screen 12 of the handheld device, as shown in Figure 4. Figure 4 displays the web page 10 in a verticalized representation as discussed above in respect of Figure 2, in a larger size than the reduced representation. This verticalized representation of the selected portion allows the user to read text and to otherwise peruse the content of interest within the web page 10. In this example, the user had selected to zoom into the top portion of the web page 10 and as such the verticalized representation of the web site 10 commences at this selected point. The web page 10 can be scrolled on the screen 12 using known means.

At this stage, the user can navigate the web page 10, click on links to other pages, enter text into text boxes, and otherwise interact with the web page. Navigation of the web page 10 can take place through conventional means (for example by scrolling, or by selecting intra-page links), or by selecting to zoom back out to the reduced representation illustrated in Figure 3 such that he can navigate the web page 10 more quickly to locate another portion of interest. If the user selects to zoom out to the reduced representation, the web page 10 is displayed on the screen 12 in the reduced representation starting at the last location appearing on the screen in the verticalized representation. In this manner, the user can switch back and forth between the reduced representation and the verticalized representation in order to quickly "hop" between portions of interest within the web page 10. In the absence of such a reduced representation feature, the user may be required to perform many scrolling operations to navigate between portions of interest.

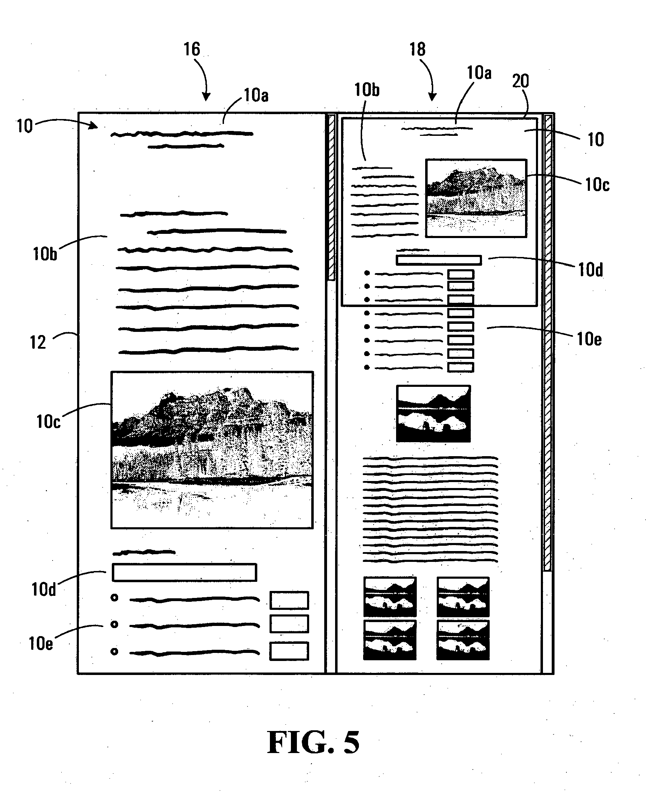

Optionally, instead of having the web page 10 appear on the screen 12 in one of the reduced representation (as illustrated in Figure 3) or the verticalized representation (as illustrated in Figure 4), the user may select to have both representations appearing on the screen simultaneously, as shown in Figure 5. In this view, the screen 12 is split into a first panel 16 and a second panel 18. The web page 10 is displayed in the first panel 16 in the verticalized representation while the web page 10 appears in the second panel 18 in the reduced representation. The web page 10 is scrollable in either panel. Optionally, instead of the second panel 18 displaying the web page 10 in a reduced representation of the web page as it was originally designed, the second panel may display the web page 10 in a scaled down representation of the verticalized web page appearing in the first panel 16.

The reduced representation of the web page 10 in the second panel 18 allows the user to see an overview of the web page 10, thereby facilitating the identification and selection of a portion of interest to be displayed in the first panel 16.

In this embodiment, the portion of the web page 10 displayed in the first panel 16 is identified in the second panel 18 by a selection box 20. In the illustrated example, the full width of the web page 10 is displayed in the first panel 16 and as such the selection box 20 extends the width of the web page 10 in the second panel 18. In the second panel 18, the selection box 20 can be moved horizontally or vertically in the web page 10 by any of a number of known means.

Once the selection box 20 has been moved to a new location within the web page 10 and that location is selected, the first panel 16 is updated to display the portion of the web page 10 identified by the selection box 20.

In the exemplary embodiment, the relative sizes of the first and second panels 16, 18 can be changed by the user.

Two exemplary methods of implementing the user interface illustrated in Figures 3 and 4 will now be described in the context of an Internet web page being downloaded, displayed and browsed on the handheld device.

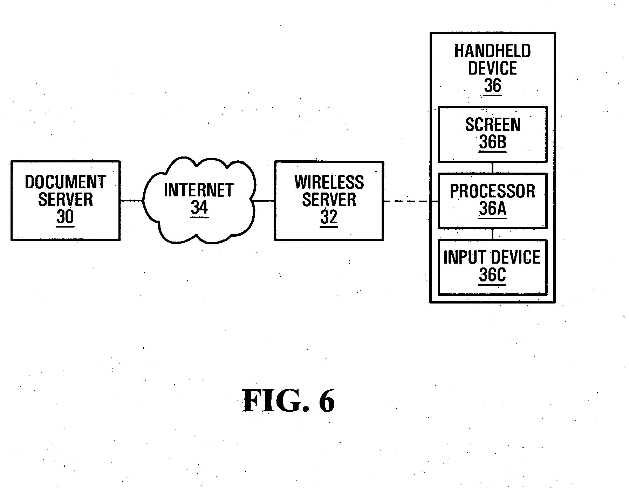

Figure 6 illustrates an exemplary network consisting of a document server 30 and a wireless server 32 both connected to the Internet 34. The wireless server 32 is connected wirelessly to a processor 36a of the handheld device 36 through a communication device (not shown) which is either integral with, or connected to the processor 36a. The processor 36a is in turn connected to a screen 36b and an input device 36c of the handheld device. The processor 36a has associated therewith, display means for directing the processor to implement the exemplary methods. Such display means may include computer software instructions for directing the processor.

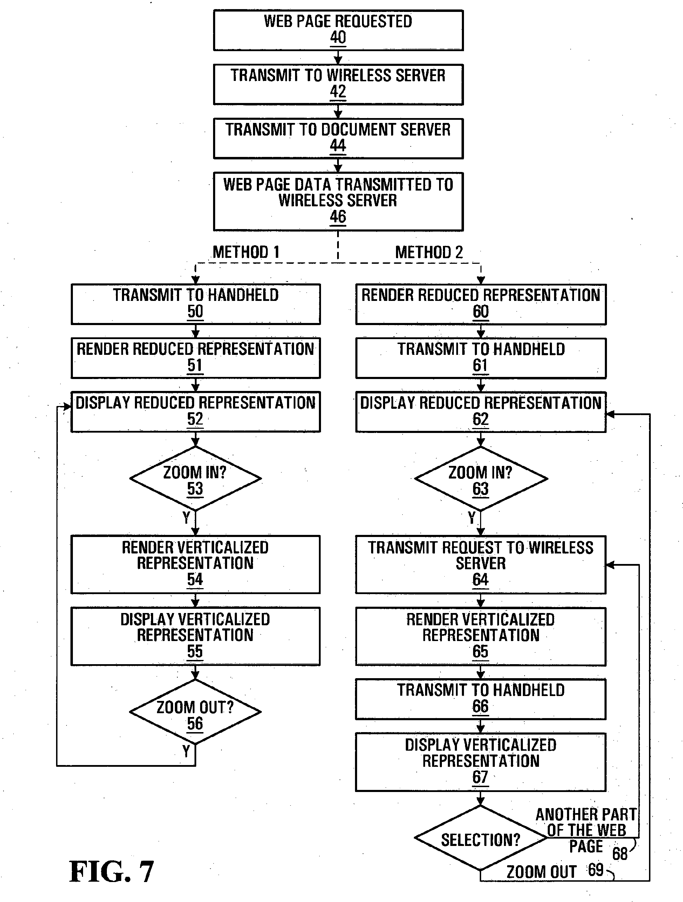

As shown in Figure 7, in both exemplary methods of implementing the preferred embodiment user interface, the user first requests 40 a web page to be downloaded, using the handheld device 36. This request is transmitted 42 wirelessly to the wireless server 32 which in turn relays 44 the request through the Internet 34 to the document server 30 having stored thereon, data for the requested web page. Upon receiving this request, the document server 30 transmits 46 the relevant web page data through the Internet 34 to the wireless server 32.

At this point, the two exemplary methods of implementing the user interface illustrated in Figures 3 and 4 diverge.

In the first method, the entirety of the web page data received by the wireless server 32 is transmitted 50 to the handheld device 36, whereupon the handheld device renders 51 a reduced representation of the web page. This reduced representation is then displayed 52 and managed on the screen 36b of the handheld device 36. If the user selects 53 within the reduced representation a point of the web page to zoom into, the handheld device 36 then renders 54 a verticalized representation of the web page commencing at the point selected, and this verticalized representation is displayed 55 and managed on the screen 36b. If the user then selects 56 to zoom out from the verticalized representation, the reduced representation is displayed 52, typically commencing at the point corresponding to the portion of the web page last displayed in the verticalized representation at the time the user selected to zoom out.

In the second method, the wireless server 32 renders 60 the reduced representation of the web page and this reduced representation is transmitted 61 to the handheld device 36. Upon receiving the reduced representation of the web page, the handheld device 36 displays 62 and manages this reduced representation. If the user selects 63 within the reduced representation a point of the web page to zoom into, a request is transmitted 64 to the wireless server 32, and the wireless server renders a verticalized representation of the web page commencing at the point selected, and this verticalized representation is transmitted 66 to the handheld device 36 along with any other associated content that is required to provide the appropriate functional and representational context in order to properly display and manage the selected portion of the web page. The handheld device 36 then displays 67 and manages the verticalized representation of the web page. If the user selects 68 to move to another portion of the web page (e.g., by scrolling up or down, or selecting an intra-page link), a verticalized representation of which has not yet been downloaded to the handheld device 36, the handheld device transmits an appropriate request to the wireless server 64. If instead the user then selects 69 to zoom out from the verticalized representation, the reduced representation is displayed 62, typically commencing at the point corresponding to the portion of the web page last displayed in the verticalized representation at the time the user selected to zoom out.

In this second method, because the size of the data associated with the reduced representation is much smaller than the size of the entire web page data, and because only data for verticalized representations of portions of interest within the web page are ever downloaded, the volume of data which must be transmitted from the wireless server 32 to the handheld device 36 to display the web page is typically less than, and can be considerably less than, if the entirety of the web page data was transmitted to the handheld device 36. Thus, the time lag between when the user requests the web page and when the web page appears on the handheld device can be reduced. Further, in the case where the user of the handheld device is charged by the volume of data downloaded, this method allows web pages to be viewed cost-effectively.

Two exemplary methods of implementing the user interface illustrated in Figure 5 will now be described in the context of an Internet web page being downloaded, displayed and browsed on the handheld device.

The first steps common to both methods are identical to those illustrated in Figure 7 as steps 40 through 46.

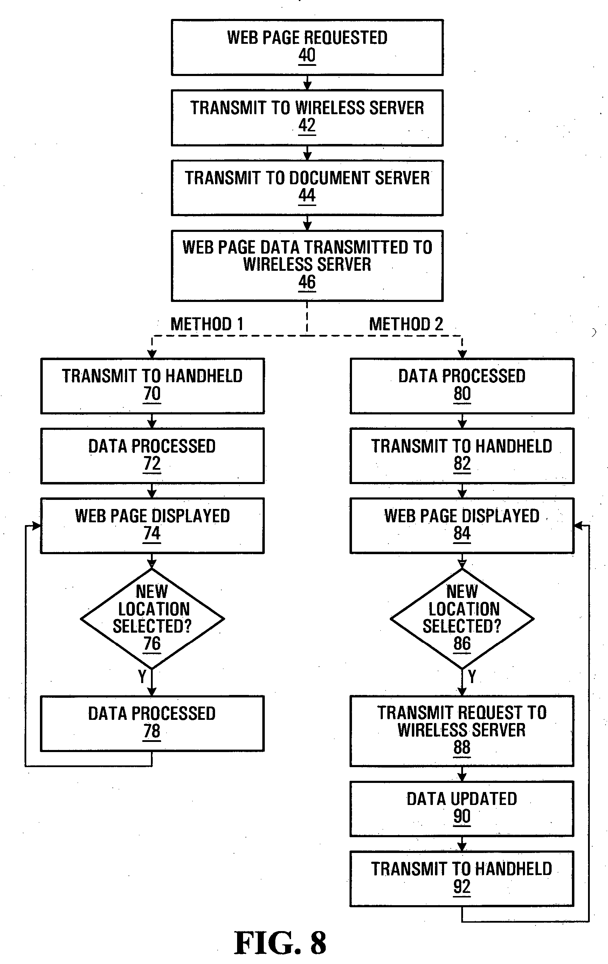

As seen in Figure 8, at this point, the two exemplary methods of implementing the user interface illustrated in Figure 5 diverge.

In the first method, the entirety of the web page data received by the wireless server 32 is transmitted 70 to the handheld device 36, whereupon the handheld device processes 72 the web page data to generate first panel data and second panel data. The first panel data contains information for displaying a portion of the web page in a verticalized representation in the first panel 16. The second panel data contains information for displaying the web page in a reduced representation in the second panel 18.

The handheld device 36 then displays and manages 74 the first panel data in the first panel 16, and the second panel data in the second panel 18. As the selection box 20 is moved to a new location within the second panel 18 and that location is selected 76 by the user, the handheld device generates 78 updated first panel data corresponding to the selected portion of the web page 10, and displays 74 the updated first panel data in the first panel 16.

In the second method, the wireless server 32 processes 80 the web page data to generate first panel data and second panel data. The first panel data and the second panel data are then transmitted 82 to the handheld device 36.

Upon receiving the first panel data and the second panel data, the handheld device 36 displays and manages 84 the first panel data in the first panel 16, and the second panel data in the second panel 18. As the selection box 20 is moved within the second panel 18 to a new location and that location is selected 86 by the user, the handheld device transmits 88 a request to the wireless server 32 for first panel data for the selected portion of the web page 10. The wireless server 32 generates 90 updated first panel data and transmits 92 this data to the handheld device 36 which displays and manages 64 the updated first panel data in the first panel 16.

As with the second method of implementing the user interface illustrated in Figures 3 and 4, in this second method, because the size of the second panel data is much smaller than the size of the entire web page data, and because only first panel data for portions of interest within the web page are ever downloaded, the volume of data which must be transmitted from the wireless server 32 to the handheld device 36 to display the web page is typically less than, and can be considerably less than, if the entirety of the web page data was transmitted to the handheld device 36. Thus, the time lag between when the user requests the web page and when the web page appears on the handheld device can be reduced. Further, in the case where the user of the handheld device is charged by the volume of data downloaded, this method allows web pages to be viewed cost-effectively.

The preferred embodiment user interfaces and methods for implementing same have been described in detail above. However, it is to be understood that variations to the interfaces and methods may be introduced without necessarily departing from the subject of this application. By way of example:
- although the user interfaces and methods have been described in the context of a wireless handheld device downloading and displaying the Internet web page, it is to be understood that the user interfaces and methods may be implemented in other contexts, display on a desktop computer, or on a cell phone, for example;
- while the user inputs to the handheld device have been described as being through a scroll wheel, it is to be understood that other user inputs may be used, mouse inputs, keyboard strokes, or stylus taps for example;
- in the figures an exemplary web page 10 is displayed for illustrative purposes only - of course other web pages, and indeed other documents may be displayed and browsed;
- although the first panel 16 and the second panel 18 have been described as being oriented side by side, other orientations are of course possible, the panels being displayed one above the other, or with the navigation panel being a movable window, for example;
- the first panel 16 is described as being updated only upon selection of a location in the web page 10 using the selection box 20 in the second panel 18 - however the image in the first panel 16 may be updated in response to other selection cues, for example the first panel 16 may be updated continuously as the selection box 20 is moved within the second panel 18, or the first panel 16 may be updated upon detecting a pause in scrolling of the selection box 20 by the user; and
- it is to be understood that in cases where a large-scale feature of the web page (such as a large image) is a selectable link, the user may identify that large-scale feature within the reduced representation and then choose to follow the link associated with that large-scale feature. In other words, the user has the ability to navigate from page to page, or even within pages, using only the reduced representation, where such features exist on the web page.

Numerous modifications and variations of the subject of this application are possible in light of the above teachings. It is therefore to be understood that within the scope of the appended claims, the subject of this application may be practiced otherwise than as specifically described herein.

## Claims

1. A method for a web browser to interact with a user input, the web browser operating on a handheld device, the method comprising:
(a) displaying (52,62) on a screen (12) of the handheld device, a first representation of a web page in a reduced size;
(b) receiving (53,63) a first user input to zoom into a portion of the web page, the portion of the web page being selected by the first user input in the first representation;
(c) displaying (55,67) on the screen, a second representation of the portion of the web page in a larger size such that the second representation replaces the first representation, the second representation being a verticalized representation of the web page in which visually distinct features of the web page are displayed in linear rendering;
(c1) receiving user scrolling input to navigate the web page displayed in the second representation;
(d) receiving (56,69) a second user input to zoom out; and
(e) displaying (52,62) on the screen, the first representation of the web page in the reduced size such that the first representation replaces the second representation and the first representation is displayed on the screen commencing at the point corresponding to the portion of the web page last displayed in the second representation at the time the user selected to zoom out.

2. The method of claim 1 further comprising:
displaying in the first representation, indicia identifying the portion of the web page to be displayed in the second representation;
wherein the portion of the web page is selected by the first user input moving the indicia within the first representation.

3. The method of claim 1 further comprising:
displaying in the first representation, indicia identifying the portion of the web page to be displayed in the second representation;
wherein the portion of the web page is selected by the first user input moving the indicia within the first representation to the portion of the web page and selecting the portion.

4. The method of any one of claims 1 to 3 further comprising:
downloading (50) the web page; and
rendering (51) the first representation of the web page in a reduced size, both prior to step (a).

5. The method of any one of claims 1 to 3 further comprising:
downloading (61) a rendering of the first representation of the web page in a reduced size before step (a); and
downloading (66) a rendering of the second representation of the portion of the web page in a larger size between steps (b) and (c).

6. The method of any one of claims 1 to 5 wherein:
the first representation of the web page features a two-dimensional structure whereby two areas of content are arranged horizontally beside one another; and
the second representation of the web page features a narrower structu re whereby the two areas of content are arranged vertically below one another.

7. A computer-readable medium having stored thereon instructions for execution by a processor of a handheld device so as to implement the method of any one of claims 1 to 6 when said instructions are executed by the handheld device.

8. A handheld device (36) for displaying a web page, the handheld device comprising:
a processor (36A);
an input device (36C) connected to the processor for communicating user inputs to the processor;
a screen (36B) connected to the processor for displaying the web page;
and
web page display means associated with the processor operable to cause the processor to:
(a) display (52,62) on the screen, a first representation of the web page in a reduced size;
(b) receive (53,63) from the input device, a first user input to zoom into a portion of the web page, the portion of interest being selected in the first representation;
(c) display (55,67) on the screen, a second representation of the portion of the web page in a larger size such that the second representation replaces the first representation, the second representation being a verticalized representation of the web page in which visually distinct features of the web page are displayed in linear rendering;
(c1) receiving user scrolling input to navigate the web page displayed in the second representation;
(d) receive (56,69) from the input device, a second user input to zoom out; and
(e) display (52,62) on the screen, the first representation of the web page in the reduced size such that the first representation replaces the second representation and the first representation is displayed on the screen commencing at the point corresponding to the portion of the web page last displayed in the second representation at the time the user selected to zoom out.

9. The handheld device of claim 8, wherein the web page display means is further operable to cause the processor to:
display in the first representation, indicia identifying the portion of the web page to be displayed in the second representation;
wherein the portion of the web page is selected by the first user input moving the indicia within the first representation.

10. The handheld device of claim 8, wherein the web page display means is further operable to cause the processor to:
display in the first representation, indicia identifying the portion of the web page to be displayed in the second representation;
wherein the portion of the web page is selected by the first user input moving the indicia within the first representation to the portion of the web page and selecting the portion.

11. The handheld device of any one of claims 8 to 10 further comprising:
a communication device connected to the processor to allow the processor to communicate with another computer,
wherein the web page display means is further operable to cause the processor to:
download (50) the web page from the another computer through the communication device; and
render (51) the first representation of the web page in the reduced size, both prior to step (a).

12. The handheld device of any one of claims 8 to 10 further comprising:
a communication device connected to the processor to allow the processor to communicate with another computer,
wherein the web page display means is further operable to cause the processor to:
download (61) from the another computer through the communication device, a rendering of the first representation of the web page in a reduced size before step (a); and
download (66) from the another computer through the communication device, a rendering of the second representation of the selected portion of the web page in a larger size between steps (b) and (c).

13. The handheld device of any one of claims 8 to 12 wherein:
the first representation of the web page features a two-dimensional structure whereby two areas of content are arranged horizontally beside one another; and
the second representation of the web page features a narrower structure whereby the two areas of content are arranged vertically below one another.

## Patentansprüche

1. Verfahren für einen Web-Browser zum Interagieren mit einer Benutzereingabe, wobei der Web-Browser auf einer handgehaltenen Vorrichtung arbeitet, wobei das Verfahren aufweist:
(a) Anzeigen (52, 62), auf einem Bildschirm (12) der handgehaltenen Vorrichtung, einer ersten Repräsentation einer Webseite in einer reduzierten Größe;
(b) Empfangen (53, 63) einer ersten Benutzereingabe zum Hineinzoomen in einen Teil der Webseite, wobei der Teil der Webseite durch die erste Benutzereingabe in der ersten Repräsentation ausgewählt wird;
(c) Anzeigen (55, 67) auf dem Bildschirm einer zweiten Repräsentation des Teils der Webseite in einer größeren Größe derart, dass die zweite Repräsentation die erste Repräsentation ersetzt, wobei die zweite Repräsentation eine vertikalisierte Repräsentation der Webseite ist, in der visuell verschiedene Merkmale der Webseite in einer linearen Darstellung angezeigt werden;
(c1) Empfangen einer Benutzer-Scroll-Eingabe zum Navigieren der Webseite, die in der zweiten Repräsentation angezeigt wird;
(d) Empfangen (56, 69) einer zweiten Benutzereingabe zum Herauszoomen; und
(e) Anzeigen (52, 62) auf dem Bildschirm der ersten Repräsentation der Webseite in der reduzierten Größe derart, dass die erste Repräsentation die zweite Repräsentation ersetzt und die erste Repräsentation auf dem Bildschirm angezeigt wird beginnend an dem Punkt, der dem Teil der Webseite entspricht, der zuletzt in der zweiten Repräsentation angezeigt wurde zu dem Zeitpunkt, an dem der Benutzer ein Herauszoomen gewählt hat.

2. Das Verfahren gemäß Anspruch 1, das weiter aufweist:
Anzeigen, in der ersten Repräsentation, von Indicia, die den Teil der Webseite identifizieren, der in der zweiten Repräsentation angezeigt werden soll;
wobei der Teil der Webseite ausgewählt wird, indem die erste Benutzereingabe die Indicia in der ersten Repräsentation bewegt.

3. Das Verfahren gemäß Anspruch 1, das weiter aufweist:
Anzeigen, in der ersten Repräsentation, von Indicia, die den Teil der Webseite identifizieren, der in der zweiten Repräsentation angezeigt werden soll;
wobei der Teil der Webseite ausgewählt wird, indem die erste Benutzereingabe die Indicia in der ersten Repräsentation zu dem Teil der Webseite bewegt und den Teil auswählt.

4. Das Verfahren gemäß einem der Ansprüche 1 bis 3, das weiter aufweist:
Herunterladen (50) der Webseite; und
Darstellen (51) der ersten Repräsentation der Webseite in einer reduzierten Größe, beides vor Schritt (a).

5. Das Verfahren gemäß einem der Ansprüche 1 bis 3, das weiter aufweist:
Herunterladen (61) einer Darstellung der ersten Repräsentation der Webseite in einer reduzierten Größe vor Schritt (a); und
Herunterladen (66) einer Darstellung der zweiten Repräsentation des Teils der Webseite in einer größeren Größe zwischen den Schritten (b) und (c).

6. Das Verfahren gemäß einem der Ansprüche 1 bis 5, wobei:
die erste Repräsentation der Webseite eine zweidimensionale Struktur hat,
wodurch zwei Bereiche von Inhalt horizontal nebeneinander angeordnet sind; und
die zweite Repräsentation der Webseite eine schmalere Struktur hat, wodurch die zwei Bereiche von Inhalt vertikal untereinander angeordnet sind.

7. Ein computerlesbares Medium mit darauf gespeicherten Anweisungen zur Ausführung durch einen Prozessor einer handgehaltenen Vorrichtung, um das Verfahren gemäß einem der Ansprüche 1 bis 6 zu implementieren, wenn die Anweisungen durch die handgehaltene Vorrichtung ausgeführt werden.

8. Eine handgehaltene Vorrichtung (36) zum Anzeigen einer Webseite, wobei die handgehaltene Vorrichtung aufweist:
einen Prozessor (36A);
eine Eingabevorrichtung (36C), die mit dem Prozessor verbunden ist, zum Kommunizieren von Benutzereingaben an den Prozessor;
einen Bildschirm (36B), der mit dem Prozessor verbunden ist, zum Anzeigen der Webseite; und
ein Webseite-Anzeigemittel, das mit dem Prozessor assoziiert ist und betriebsfähig ist zum Veranlassen des Prozessors zum:
(a) Anzeigen (52, 62), auf dem Bildschirm, einer ersten Repräsentation der Webseite in einer reduzierten Größe;
(b) Empfangen (53, 63), von der Eingabevorrichtung, einer ersten Benutzereingabe zum Hineinzoomen in einen Teil der Webseite, wobei der Teil von Interesse in der ersten Repräsentation ausgewählt wird;
(c) Anzeigen (55, 67) auf dem Bildschirm einer zweiten Repräsentation des Teils der Webseite in einer größeren Größe derart, dass die zweite Repräsentation die erste Repräsentation ersetzt, wobei die zweite Repräsentation eine vertikalisierte Repräsentation der Webseite ist, in der visuell verschiedene Merkmale der Webseite in einer linearen Darstellung angezeigt werden;
(c1) Empfangen einer Benutzer-Scroll-Eingabe zum Navigieren der Webseite, die in der zweiten Repräsentation angezeigt wird;
(d) Empfangen (56, 69), von der Eingabevorrichtung, einer zweiten Benutzereingabe zum Herauszoomen; und
(e) Anzeigen (52, 62) auf dem Bildschirm der ersten Repräsentation der Webseite in der reduzierten Größe derart, dass die erste Repräsentation die zweite Repräsentation ersetzt und die erste Repräsentation auf dem Bildschirm angezeigt wird beginnend an dem Punkt, der dem Teil der Webseite entspricht, der zuletzt in der zweiten Repräsentation angezeigt wurde zu dem Zeitpunkt, an dem der Benutzer ein Herauszoomen gewählt hat.

9. Die handgehaltene Vorrichtung gemäß Anspruch 8, wobei das Webseite-Anzeigemittel weiter betriebsfähig ist, um den Prozessor zu veranlassen zum:
Anzeigen, in der ersten Repräsentation, von Indicia, die den Teil der Webseite identifizieren, der in der zweiten Repräsentation angezeigt werden soll;
wobei der Teil der Webseite ausgewählt wird, indem die erste Benutzereingabe die Indicia in der ersten Repräsentation bewegt.

10. Die handgehaltene Vorrichtung gemäß Anspruch 8, wobei das Webseite-Anzeigemittel weiter betriebsfähig ist, um den Prozessor zu veranlassen zum:
Anzeigen, in der ersten Repräsentation, von Indicia, die den Teil der Webseite identifizieren, der in der zweiten Repräsentation angezeigt werden soll;
wobei der Teil der Webseite ausgewählt wird, indem die erste Benutzereingabe die Indicia in der ersten Repräsentation zu dem Teil der Webseite bewegt und den Teil auswählt.

11. Die handgehaltene Vorrichtung gemäß einem der Ansprüche 8 bis 10, die weiter aufweist:
eine Kommunikationsvorrichtung, die mit dem Prozessor verbunden ist, um dem Prozessor zu ermöglichen, mit einem anderen Computer zu kommunizieren,
wobei das Webseite-Anzeigemittel weiter betriebsfähig ist, um den Prozessor zu veranlassen zum:
Herunterladen (50) der Webseite von dem anderen Computer über die Kommunikationsvorrichtung; und
Darstellen (51) der ersten Repräsentation der Webseite in der reduzierten Größe, beides vor Schritt (a).

12. Die handgehaltene Vorrichtung gemäß einem der Ansprüche 8 bis 10, die weiter aufweist:
eine Kommunikationsvorrichtung, die mit dem Prozessor verbunden ist, um dem Prozessor zu ermöglichen, mit einem anderen Computer zu kommunizieren,
wobei das Webseite-Anzeigemittel weiter betriebsfähig ist, um den Prozessor zu veranlassen zum:
Herunterladen (61) von dem anderen Computer über die Kommunikationsvorrichtung einer Darstellung der ersten Repräsentation der Webseite in einer reduzierten Größe vor Schritt (a); und
Herunterladen (66) von dem anderen Computer über die Kommunikationsvorrichtung einer Darstellung der zweiten Repräsentation des ausgewählten Teils der Webseite in einer größeren Größe zwischen den Schritten (b) und (c).

13. Die handgehaltene Vorrichtung gemäß einem der Ansprüche 8 bis 12, wobei:
die erste Repräsentation der Webseite eine zweidimensionale Struktur hat,
wodurch zwei Bereiche von Inhalt horizontal nebeneinander angeordnet sind; und
die zweite Repräsentation der Webseite eine schmalere Struktur hat, wodurch die zwei Bereiche von Inhalt vertikal untereinander angeordnet sind.

## Revendications

1. Procédé par lequel un navigateur web interagit avec une saisie de l'utilisateur, le navigateur web fonctionnant sur un dispositif portatif, le procédé comprenant les étapes consistant à :
(a) afficher (52, 62) sur un écran d'affichage (12) du dispositif portatif une première représentation d'une page web dans une taille réduite ;
(b) recevoir (53, 63) une première saisie de l'utilisateur afin de zoomer sur une partie de la page web, la partie de la page web étant sélectionnée par la première saisie de l'utilisateur dans la première représentation ;
(c) afficher (55, 67) à l'écran une seconde représentation de la partie de la page web, dans une taille plus grande, si bien que la seconde représentation remplace la première représentation, la seconde représentation étant une représentation verticalisée de la page web dans laquelle des fonctionnalités visuellement distinctes de la page web sont affichées sous la forme d'un rendu linéaire ;
(c1) recevoir une saisie de déroulement de l'utilisateur afin de faire défiler la page web affichée dans la seconde représentation ;
(d) recevoir (56, 69) une seconde saisie de l'utilisateur pour effectuer un zoom arrière ; et
(e) afficher (52, 62) à l'écran la première représentation de la page web dans la taille réduite, si bien que la première représentation remplace la seconde représentation et que la première représentation est affichée à l'écran en commençant au point correspondant à la partie de la page web qui a été la dernière affichée dans la seconde représentation à l'instant où l'utilisateur a choisi d'effectuer un zoom arrière.

2. Procédé selon la revendication 1, comprenant en outre l'étape consistant à :
afficher dans la première représentation des repères qui identifient la partie de la page web à afficher dans la seconde représentation ;
dans lequel la partie de la page web est sélectionnée par le fait que la première saisie de l'utilisateur déplace les repères dans la première représentation.

3. Procédé selon la revendication 1, comprenant en outre l'étape consistant à :
afficher dans la première représentation des repères qui identifient la partie de la page web à afficher dans la seconde représentation ;
dans lequel la partie de la page web est sélectionnée par le fait que la première saisie de l'utilisateur déplace les repères dans la première représentation vers la partie de la page web et sélectionne la partie.

4. Procédé selon l'une quelconque des revendications 1 à 3, comprenant en outre les étapes consistant à :
télécharger (50) la page web ; et
effectuer le rendu (51) de la première représentation de la page web dans une taille réduite, toutes deux étant antérieures à l'étape (a).

5. Procédé selon l'une quelconque des revendications 1 à 3, comprenant en outre les étapes consistant à :
télécharger (61) un rendu de la première représentation de la page web dans une taille réduite avant l'étape (a) ; et
télécharger (66) un rendu de la seconde représentation de la partie de la page web dans une taille plus grande entre les étapes (b) et (c).

6. Procédé selon l'une quelconque des revendications 1 à 5, dans lequel :
la première représentation de la page web présente une structure bidimensionnelle dans laquelle deux zones de contenu sont disposées horizontalement côte à côte ; et
la seconde représentation de la page web présente une structure plus étroite, si bien que deux zones de contenu sont disposées verticalement l'une au-dessous de l'autre.

7. Support lisible par ordinateur portant enregistrées des instructions destinées à être exécutées par un processeur d'un dispositif portatif afin de mettre en oeuvre le procédé selon l'une quelconque des revendications 1 à 6 lorsque lesdites instructions sont exécutées par le dispositif portatif.

8. Dispositif portatif (36) destiné à afficher une page web, le dispositif portatif comprenant :
un processeur (36A) ;
un dispositif de saisie (36C) connecté au processeur et destiné à communiquer au processeur des saisies de l'utilisateur ;
un écran d'affichage (36B) connecté au processeur et destiné à afficher la page web ; et
un moyen d'affichage de page web associé au processeur et en mesure de commander au processeur de :
(a) afficher (52, 62) à l'écran une première représentation de la page web dans une taille réduite ;
(b) recevoir (53, 63) du dispositif d'entrée une première saisie de l'utilisateur afin de zoomer sur une partie de la page web, la partie intéressante étant sélectionnée dans la première représentation ;
(c) afficher (55, 67) à l'écran une seconde représentation de la partie de la page web, dans une taille plus grande, si bien que la seconde représentation remplace la première représentation, la seconde représentation étant une représentation verticalisée de la page web dans laquelle des fonctionnalités visuellement distinctes de la page web sont affichées sous la forme d'un rendu linéaire ;
(c1) recevoir une saisie de déroulement de l'utilisateur afin de faire défiler la page web affichée dans la seconde représentation ;
(d) recevoir (56, 69) du dispositif de saisie une seconde saisie de l'utilisateur pour effectuer un zoom arrière ; et
(e) afficher (52, 62) à l'écran la première représentation de la page web dans la taille réduite, si bien que la première représentation remplace la seconde représentation et que la première représentation est affichée à l'écran en commençant au point correspondant à la partie de la page web qui a été la dernière affichée dans la seconde représentation à l'instant où l'utilisateur a choisi d'effectuer un zoom arrière.

9. Dispositif portatif selon la revendication 8, dans lequel le moyen d'affichage de page web est en outre en mesure de commander au processeur de :
afficher dans la première représentation des repères qui identifient la partie de la page web à afficher dans la seconde représentation ;
dans lequel la partie de la page web est sélectionnée par le fait que la première saisie de l'utilisateur déplace les repères dans la première représentation.

10. Dispositif portatif selon la revendication 8, dans lequel le moyen d'affichage de page web est en outre en mesure de commander au processeur de :
afficher dans la première représentation des repères qui identifient la partie de la page web à afficher dans la seconde représentation ;
dans lequel la partie de la page web est sélectionnée par le fait que la première saisie de l'utilisateur déplace les repères dans la première représentation vers la partie de la page web et sélectionne la partie.

11. Dispositif portatif selon l'une quelconque des revendications 8 à 10, comprenant en outre :
un dispositif de communication connecté au processeur afin de permettre au processeur de communiquer avec un autre ordinateur ;
dans lequel le moyen d'affichage de page web est en outre en mesure de commander au processeur de :
télécharger (50) la page web à partir de l'autre ordinateur, via le dispositif de communication ; et
effectuer le rendu (51) de la première représentation de la page web dans une taille réduite, toutes deux étant antérieures à l'étape (a).

12. Dispositif portatif selon l'une quelconque des revendications 8 à 10, comprenant en outre :
un dispositif de communication connecté au processeur afin de permettre au processeur de communiquer avec un autre ordinateur ;
dans lequel le moyen d'affichage de page web est en outre en mesure de commander au processeur de :
télécharger (61) à partir de l'autre ordinateur, via le dispositif de communication, un rendu de la première représentation de la page web dans une taille réduite avant l'étape (a) ; et
télécharger (66) à partir de l'autre ordinateur, via le dispositif de communication, un rendu de la seconde représentation de la partie de la page web dans une taille plus grande entre les étapes (b) et (c).

13. Dispositif portatif selon l'une quelconque des revendications 8 à 12, dans lequel :
la première représentation de la page web présente une structure bidimensionnelle dans laquelle deux zones de contenu sont disposées horizontalement côte à côte ; et
la seconde représentation de la page web présente une structure plus étroite, si bien que deux zones de contenu sont disposées verticalement l'une au-dessous de l'autre.
